# EUROPÄISCHE PATENTANMELDUNG

(11) **EP 2 103 209 A2**
(43) Veröffentlichungstag der Anmeldung: **23.09.2009**
(21) Anmeldenummer: 09003232.7
(22) Anmeldetag: 05.03.2009
(51) Int. Cl.: A01L 7/02

(54) **Vorrichtung zur Verhinderung des Abtretens eines Hufschutzes**

(30) Priorität: 20.03.2008 DE 102008015139
(71) Anmelder: Fischlein, Helmut, 36251 Ludwigsau-Hainrode (DE)
(72) Erfinder: Fischlein, Helmut, 36251 Ludwigsau-Hainrode (DE)
(74) Vertreter: Walther, Walther & Hinz GbR

(57) **Zusammenfassung**

Gegenstand der Erfindung ist eine Vorrichtung zur Verhinderung des Abtretens eines Hufschutzes (1), mit einer Einlage (10, 10a, 20) zwischen Hufschutz (1) und Huf, wobei die Einlage in etwa der Kontur des Hufschutzes (1) entspricht, wobei die Einlage (10, 10a, 20) im Bereich des hinteren äußeren Randes schildförmige Elemente (11) aufweist, die am unteren Ende der Einlage derart befestigt sind, dass der Überstand zwischen Huf und Einlage überbrückt ist.

## Beschreibung

Die Erfindung betrifft eine Vorrichtung zur Verhinderung des Abtretens eines Hufschutzes.

Unter einem Hufschutz versteht man z. B. ein Hufeisen oder einen Kunststoffhufbeschlag für Pferde, Ponys, Esel oder sogenannte Klauenbrettchen oder Klauenbeschläge für Schafe und Kühe.

Der Huf eines Tieres ändert sich im Laufe der Zeit, insbesondere verbreitert und verlängert er sich. Insofern ist vorgesehen, dass der Hufschutz, insbesondere im Trachtenbereich, also im hinteren Drittel des Hufes, übersteht. Durch diesen Überstand besteht immer die Gefahr, dass die Tiere mit dem überstehenden Teil des Hufschutzes, beispielsweise in Wurzeln, hängen bleiben, sich insofern der Hufschutz löst oder sogar verloren geht. Die Folge hiervon ist, dass das Tier neu beschlagen werden muss.

Insbesondere im Sportbereich, aber auch sonst, besteht allerdings eine noch ganz andere Gefahr; diese besteht darin, dass beispielsweise der hintere Huf des Pferdes beim Galopp mit dem vorderen Ende an das hintere Ende des Vorderhufes schlägt, und dort genau auf den Überstand des Hufschutzes. Das heißt, dass das Tier sich auf den eigenen Hufschutz tritt. Hierbei besteht die Gefahr, dass sich der Hufschutz lockert oder sogar verloren geht. Des Weiteren besteht hierbei die Gefahr, dass das Tier stolpert oder Sehnenschaden, Abrisse oder ähnliche Verletzungen davon trägt.

Diese Problematik ist durchaus bekannt, so dass man beispielsweise bei Pferden sogenannte Springglocken, Manschetten oder Gamaschen vorsieht, die über den Hufschutz überstehen und insofern das Auftreten auf den Hufschutz verhindern sollen. Springglocken werden über den Huf gestülpt. Die Springglocke liegt eher lose am Huf des Tieres an, weshalb der Erfolg nur mäßig ist, und insbesondere bei längerem Gebrauch auch die Gefahr besteht, dass sich bei Relativbewegung der Sprungglocke zur Fessel des Fußes hierdurch das Fell aufscheuert. Bekannt ist ebenfalls, den Huf zu "tapen". Hierbei wird der Huf oder die Klaue getapt, und zwar in den Bereich des Hufschutzes hinein, wobei Schlauchstücke, Wolle oder Ähnliches auf dem Überstand des Hufschutzes aufliegen, und dann der Hufschutz und Huf mit Tapes umwickelt werden. Solche Tapes halten allerdings nur kurze Zeit, weshalb solche Maßnahmen nur im Sportbereich zur Anwendung gelangen.

Alle nach dem Stand der Technik getroffenen Maßnahmen dienen schlussendlich dem Ballenschutz, fungieren aber nicht als Abtretschutz. Darüber hinaus sind die Maßnahmen nur zeitlich begrenzt angelegt. In Bezug auf den Schutz des Ballens sind temporäre Maßnahmen, z. B. aus der DE 20 2007 004 985 U1, EP 886 468 B1 und der DE 197 16 609 C2 bekannt.

Darüber hinaus ist aus EP 0 893 057 B1 bekannt, einen offenen Hufbeschlag aus Kunststoff vorzusehen, der einen sogenannten Basisbeschlag aufweist, wobei der Basisbeschlag einen Laufbeschlag lösbar aufnimmt. In einer Variante ist hierbei vorgesehen, dass der Basisbeschlag mit dem Huf verklebt wird, wobei der Basisbeschlag auf einem Teil seines Umfanges Laschen aufweist, die mit dem Huf verklebt werden. Das heißt, die Laschen dienen der Befestigung des Basisbeschlags am Huf.

Die der Erfindung zugrunde liegende Aufgabe besteht darin, zu verhindern, dass sich die Pferde den eigenen Hufbeschlag oder Hufschutz abtreten. Insofern ist erfindungsgemäß zwischen Hufschutz und Huf eine Einlage vorgesehen, wobei die Einlage in etwa der Kontur des Hufschutzes entspricht, wobei die Einlage im Bereich des hinteren äußeren Randes einige schildförmige Elemente aufweist, die am oberen Ende am Huf anliegen und am unteren Ende an der Einlage derart befestigt sind, dass der Überstand zwischen Huf und Einlage überbrückt ist. Diese schildförmigen Elemente, die man auch als "Aufzüge" bezeichnen kann, erstrecken sich über einen wesentlichen Teil der Höhe des Hufes und sind derart gestaltet, dass diese am Ende auslaufend ausgebildet sind, d.h. dass zwischen dem schildförmigen Element und dem Huf im Wesentlichen kein Absatz entsteht, so dass nicht die Gefahr besteht, dass sich das Pferd hierdurch das Hufeisen abtritt. Da der Huf im hinteren Trachtenbereich nach außen verlaufend ausgebildet ist, ist korrespondierend hierzu das jeweilige schildartige Element ebenfalls nach außen, also vom Huf weg, gerichtet, liegt aber mit dem oberen Ende am Huf an. Die einzelnen schildartigen Elemente können auch als Schildleiste zusammengefasst sein, wobei eine jede solche Leiste sich zu beiden Seiten der hinteren Huföffnung erstreckt.

Weitere vorteilhafte Merkmale ergeben sich aus den Unteransprüchen.

Die schildförmigen Elemente sind nach einem weiteren Merkmal der Erfindung darüber hinaus zum Seitenbereich des Hufes zu abfallend ausgebildet, da - wie bereits ausgeführt - nur im hinteren Bereich tatsächlich die Gefahr des Abtretens wirklich besteht.

Die Einlage ist korrespondierend zu der Form des Hufschutzes ringförmig ausgebildet. Nach einer anderen Variante ist die Einlage hufeisenförmig ausgebildet, also im hinteren Bereich geöffnet, wobei hier zur Größenanpassung Schlitze am inneren Rand der Einlage vorgesehen sein können.

Nach einer besonderen Ausführungsform ist vorgesehen, dass die Einlage plattenförmig ausgebildet ist, und zwar entsprechend der Kontur des Hufschutzes. Vorteilhaft gegenüber einer ring- oder hufeisenförmigen Gestaltung ist, dass auf der Platte der Hohlraum unter dem Huf aufgefüttert werden kann, z. B. durch Silikon, Wolle u. ä. Insofern können in der Platte auch Öffnungen im Sohlenbereich vorgesehen sein, um z. B. Silikon in den Hohlraum unter dem Huf einzuspritzen. Durch die Unterfütterung wird der Huf im Sohlenbereich gestützt.

Des Weiteren ist vorgesehen, dass die Einlage aus elastisch nachgiebigem Material gefertigt ist, was bedeutet, dass diese Einlage auch dämpfende Wirkung zwischen Huf und Hufschutz, also beispielsweise einem Hufbeschlag, bewirkt, was die Verletzungsanfälligkeit eines Tieres, und hier insbesondere eines Pferdes, das auf hartem Untergrund laufen muss, vermindert.

Anhand der Zeichnungen wird die Erfindung nachstehend beispielhaft näher erläutert.
- Figur 1: zeigt hierbei in perspektivischer Darstellung schematisch einen Hufschutz mit einer Einlage in einer Ansicht von hinten in Hufeisenform;
- Figur 2: zeigt eine Ansicht von oben gemäß Fig. 1;
- Figur 3: zeigt eine Seitenansicht im Schnitt gemäß Fig. 2;
- Figur 4: zeigt die Ausbildung der Einlage in Form einer Platte;
- Figur 5: zeigt die Ausbildung der Einlage in Form eines geschlossenen Rings in einer Ansicht von oben;
- Fig. 6+6a: zeigen schematisch Ansichten von der Seite und von hinten auf die Einlage mit Huf.

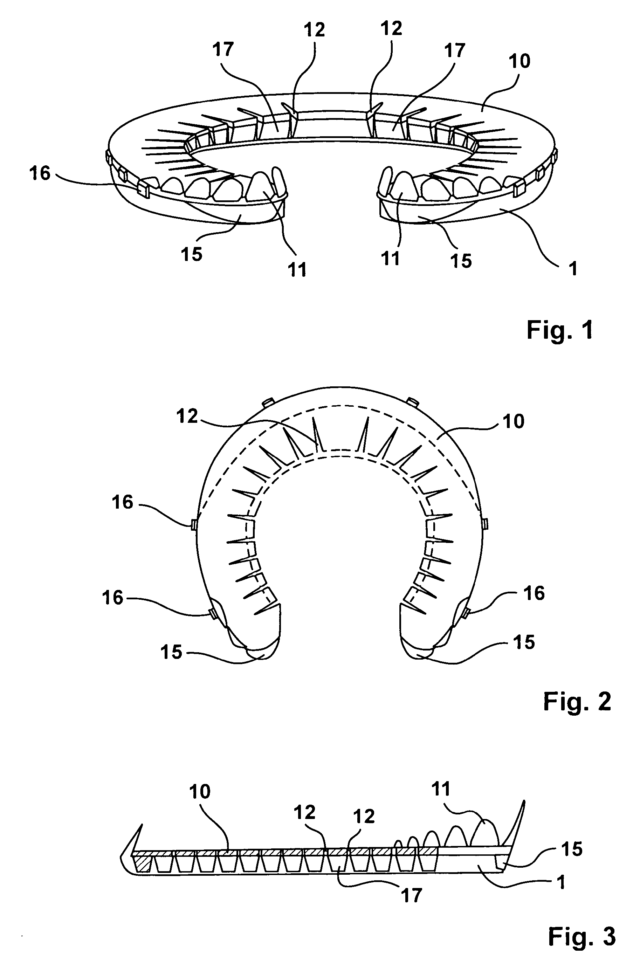

Bei der Ausführungsform gemäß Fig. 1 und Fig. 2 ist der Hufschutz, beispielsweise ein Hufbeschlag, mit 1 bezeichnet. Auf dem Hufbeschlag 1 befindet sich die Einlage 10, die entsprechend dem Hufschutz hufeisenförmig ausgebildet ist. Die Einlage 10, die Gegenstand der Erfindung ist, stellt sich als ein ringförmiges im Bereich der Tracht offenes Element dar, das im Bereich der Tracht weiterhin die schildartigen Elemente 11 aufweist. Die schildartigen Elemente 11 sind segmentiert ausgebildet, und ihrer Höhe derart gestaltet, dass im Bereich der Tracht, also im hinteren Bereich des Hufes die schildartigen Elemente höher sind, als im Seitenbereich. Darüber hinaus besitzt die Einlage 10 auf dem inneren Rand Schlitze 12, um eine leichte Anpassung an den Hufbeschlag 1 vornehmen zu können. Denn durch die Schlitze wird eine Veränderung des Radius der Kreisbogenform der Einlage, die aus elastisch nachgiebigem Material besteht, ermöglicht.

Des Weiteren ist erkennbar, dass die Einlage einen über den Hufschutz im Einbauzustand nach unten überstehenden Randbereich 15 und gegebenenfalls über den Hufschutz sich nach unten erstreckende innere und äußere Stege 16, 17 aufweist, um während des Vorgangs des Beschlagens die Einlage ,auf dem Hufschutz zu sichern.

Aus Fig. 3 ist erkennbar, dass die schildartigen Elemente 11 vom Huf aus gesehen nach schräg hinten auslaufen, aber dennoch mit ihrem oberen Ende am Huf eng anliegen und am unteren Ende unter Bildung eines Abstandes zwischen Huf und schildartigem Element an der Einlage befestigt sind.

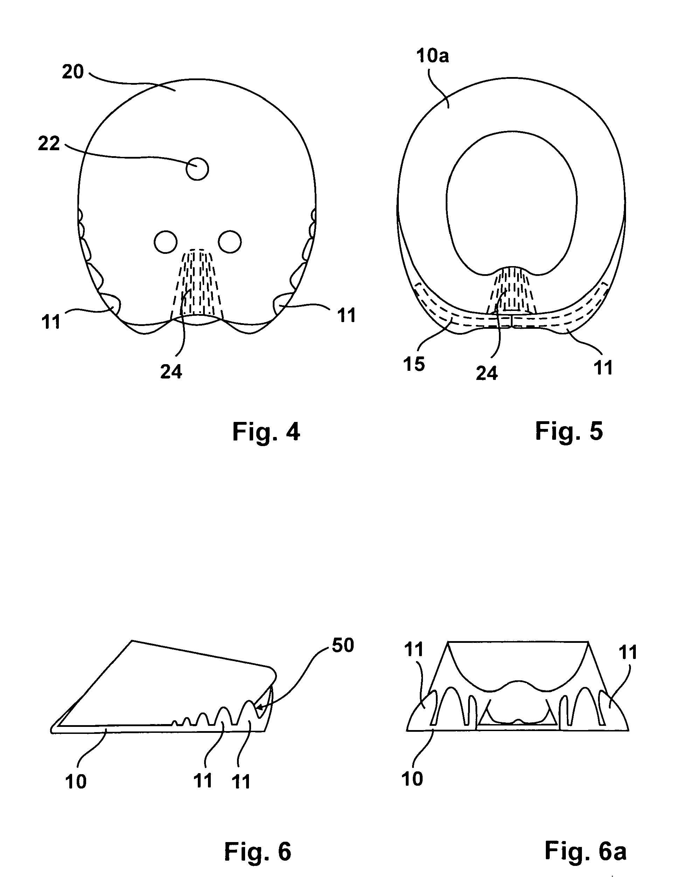

Bei der Ausführungsform gemäß Fig. 4 ist die Einlage platten- oder scheibenförmig ausgebildet, wobei die scheibenförmige Einlage das Bezugszeichen 20 aufweist. Auch hier sind sogenannte schildförmige Elemente oder Aufzüge 11 im hinteren Bereich der plattenförmigen Einlage 20 vorgesehen, wie sich dies ebenfalls aus der Fig. 4 ergibt. Darüber hinaus weist die Platte im Bereich des Strahles Öffnungen 22 auf, um nicht nur eine Belüftung des Strahlbereiches zu ermöglichen, sondern um zur Stützung der Sohle des Hufes durch diese Öffnungen z. B. Silikon einzuspritzen. Des Weiteren sind im Strahlbereich fingerförmige Erhöhungen 24 auf der Plattenunterseite vorgesehen, um eine Abstützung des Hufes zu gewährleisten.

Fig. 5 zeigt die Einlage 10a in Form eines geschlossenen Rings; die Ausbildung ist ansonsten, bis auf die Schlitze im inneren Randbereich der Einlage, sowie die fehlenden Stege 16, 17 gleich mit der hufeisenförmigen Einlage 10, also der hinten offenen Einlage. Allerdings ist der überstehende Randbereich 15 vorhanden. Insofern sind auch die gleichen Bezugszeichen gewählt.

Die Fig. 6, 6a zeigen schematisch eine Seitenansicht auf den Huf mit lediglich der Einlage; der Hufschutz ist weggelassen. Insbesondere aus Fig. 6 ist erkennbar, wie die schildartigen Elemente den Überstand (Pfeil 50) der Einlage im hinteren Bereich überbrücken. Erkennbar ist ebenfalls, dass die schildartigen Elemente 11 seitlich ihre Höhe vermindern, also abfallen und auch nur in den Seitenbereich des Hufes ragen.

## Patentansprüche

1. Vorrichtung zur Verhinderung des Abtretens eines Hufschutzes (1),
**gekennzeichnet durch**
eine Einlage (10, 10a, 20) zwischen Hufschutz (1) und Huf, wobei die Einlage in etwa der Kontur des Hufschutzes (1) entspricht, wobei die Einlage (10, 10a, 20) im Bereich des hinteren äußeren Randes schildförmige Elemente (11) aufweist, die am unteren Ende der Einlage derart befestigt sind, dass der Überstand zwischen Huf und Einlage überbrückt ist.

2. Vorrichtung nach Anspruch 1,
**dadurch gekennzeichnet,**
**dass** die schildförmigen Elemente (11) an der Hufwand anliegen.

3. Vorrichtung nach Anspruch 1,
**dadurch gekennzeichnet,**
**dass** die Höhe der schildförmigen Elemente (11) Seitenbereich des Hufes zu abfallend ausgebildet sind.

4. Vorrichtung nach einem der voranstehenden Ansprüche,
**dadurch gekennzeichnet,**
**dass** die Einlage (10, 10a) korrespondierend zur Form des Hufschutzes (1) ring- oder hufeisenförmig ausgebildet ist.

5. Vorrichtung nach einem der voranstehenden Ansprüche,
**dadurch gekennzeichnet,**
**dass** die Einlage (10) im Bereich des inneren Randes geschlitzt (12) ausgebildet ist.

6. Vorrichtung nach einem der voranstehenden Ansprüche,
**dadurch gekennzeichnet,**
**dass** die Einlage (10, 10a, 20) aus elastisch nachgiebigem Material gefertigt ist.

7. Vorrichtung nach einem der voranstehenden Ansprüche,
**dadurch gekennzeichnet,**
**dass** die Einlage (20) plattenförmig entsprechend der Kontur des Hufschutzes (1) ausgebildet ist.

8. Vorrichtung nach einem der voranstehenden Ansprüche,
**dadurch gekennzeichnet,**
**dass** die Einlage (10, 10a) einen über den Hufschutz nach unten überstehenden Randbereich (15) aufweist.

9. Vorrichtung nach einem der voranstehenden Ansprüche,
**dadurch gekennzeichnet,**
**dass** die Platte (20) auf der Unterseite im Bereich des Strahles des Hufes fingerförmige Erhöhungen (24) aufweist.

10. Vorrichtung nach einem der voranstehenden Ansprüche,
**dadurch gekennzeichnet,**
**dass** sich die schildförmigen Elemente (11) seitlich bis maximal zur Hälfte des Hufes erstrecken.

11. Vorrichtung nach einem der voranstehenden Ansprüche,
**dadurch gekennzeichnet,**
**dass** die Einlage (10) nach unten überstehende innere und äußere Stege (16, 17) aufweist.
